# EUROPEAN PATENT SPECIFICATION

(11) **EP 1 249 478 B1**
(45) Date of publication and mention of the grant of the patent: **25.02.2004**
(21) Application number: 01303153.9
(22) Date of filing: 02.04.2001
(51) Int. Cl.: C09J 1/00, C09J 5/06, C03C 27/06

(54) **Improved quartz glass product**
Verbessertes Quarzglasproduct
Produit en verre de quartz amélioré

(43) Date of publication of application: 16.10.2002
(73) Proprietor: Heraeus Quartz Limited, East Kilbride, G75 OYF (GB)
(72) Inventor: Thiede, Eberhard, 14712 Rathenow (DE); Pitzen, Arno, 36381 Schluechtern (DE)
(74) Representative: Moreland, David, Dr.

(56) References cited:
- DATABASE WPI Derwent Publications Ltd., London, GB; AN 1983-841987 XP002174571 & JP 58 190877 A (IWASAKI ELEC KK), 7 November 1983 (1983-11-07)

## Description

### FIELD OF INVENTION

This invention relates to a quartz glass product constructed using a glue. The invention also relates to a method of manufacturing a quartz glass product using a glue, and to use of a glue in the manufacture of quartz glass products.

### BACKGROUND TO INVENTION

Previously, welding technology has been used to bind together two or more pieces of quartz glass. This involves applying heat to a point of joining wherein the two pieces of quartz glass are welded (ie "melted") onto each other. Additional materials may also be added during the welding process. However, there are a number of disadvantages in using this process. In particular, dimensional accuracy of the welding process is essentially determined by the skill of the worker. The use of welding technology is therefore expensive as highly skilled personnel have to be used. Furthermore, during welding, local overheating can occur which can lead to an inner tension in the welding seam and unwanted deformation. It is therefore normally necessary after welding to carry out stress-free annealing at high temperature ranges of about 1200°C. If a product has a number of welded seams, uncontrollable inner tension can be created and dimensional accuracy may not be maintained within required strict limits. This leads to a large number of rejects which, in the majority of cases, can only be detected at the finished product stage. It should also be noted that reworking of the final product can only be carried out to a limited extent.

JP 58 190877A (IWASAKI DENKI) discloses sealing compositions comprising metal oxides which are suspended in ethylene glycol.

It is therefore an object of at least one aspect of the present invention to provide an improved way of joining. at least two pieces of quartz glass.

Furthermore, it is an object of at least one aspect of the present invention to provide use of a glue in adhering two pieces of quartz glass wherein the glue is resistant to acid, particularly hydrofluoric and stable up to at least 1200°C.

It is a yet further object of at least one aspect of the present invention to obviate or mitigate one or more of the aforementioned problems or disadvantages in the prior art.

### SUMMARY OF INVENTION

According to a first aspect of the present invention there is provided: a quartz glass product including at least two quartz glass bodies adhered together by a glue, the glue comprising at least one metal oxide and a volatile organic material.

Herein by the term "volatile organic material" is meant any organic material capable of evaporating under heat and acting as a liquid/paste-like medium for the metal oxide. A suitable example is an organic solvent.

The quartz glass bodies may be formed from natural or synthetic quartz glass.

The quartz glass product may be adapted for use in the chemical industries, casing and container production, clean room applications, semiconductor production facilities, medical technology and storage/sealing technology in mechanical engineering and precision mechanics. In particular, the quartz glass product may be selected from one of the following: a pedestal, boat, carrier, tube, injector, bell jar, profile tubing, gas inlet pipe with optional cup joints and a tank such as for use with acids.

According to a second aspect of the present invention there is provided a method of manufacturing a quartz glass product by adhering at least two quartz glass bodies together comprising the steps of:
providing a glue comprising at least one metal oxide and a volatile organic material,
applying the glue to at least a portion of one of the quartz glass bodies, and
presenting the portion of one of the quartz glass bodies and a portion of the other quartz glass body so as to adhere the quartz glass bodies together by means of the glue.

Preferably, the glue is heated after the quartz glass bodies have been presented to one another.

Preferably, the glue is applied by inserting the glue into an aperture of one of the quartz glass bodies and/or optionally placing the glue on to a portion of a member of the other quartz glass body, which fits into the aperture.

Preferably, the aperture and member have co-acting portions so that the member may be slotted into the aperture. It is preferred if a portion comprises semi-circular incisions on an outer surface of the member.

Preferably, the heating of the glue comprises a number of heating steps.

Preferably, the heating of the glue comprises the steps of:
heating to about 100°C for about 60 minutes;
heating to about 200°C for about 60 minutes;
heating to about 370°C for about 60 minutes;
and optionally heating to about 1200°C for about 60 minutes.

It has been found that heating above about 300°C causes the metal oxide structure to expand, thereby securely fixing the member within the aperture. Advantageously, an original size of the metal oxide expands up to about eight times on heating.

Preferably, an exposed surface of the glue is, after cooling, sealed with a sealant.

It is preferred if the sealant is formed from one or more of the following:
(a) pure silicon powder, with a grain size smaller than 0.1mm;
(b) pure silicon powder, with a grain size smaller than 0.1mm, mixed with ethylene glycol until a paste that is easy to spread is obtained;
(c) pure silicon powder, with a grain size smaller than 0.1mm in an amount of 0.1 to 1.5% by weight, mixed with AEROSIL® (eg type OX 50, , or MOX 170, both of which are supplied by Degussa-Huels) approximately 2% by volume and/or approximately 1% by volume of cordierite glass SiO₂(2MgO.2Al₂O₃) with a grain size of 0.1mm mixed with ethylene glycol until a paste that is easy to spread is obtained; or
(d) a liquid component such as Glasurfluid, Empress 1 (liquid) (Registered Trademark, supplied by IVOCLAR) approximately 35% by weight, mixed with A (type OX 50, Registered Trademark, supplied by Degussa-Huels) approximately 5% by weight, mixed with a paste component, eg Glasurpaste, Empress 2 (paste) (Registered Trademark, supplied by IVOCLAR) approximately 60% by weight until a paste is obtained that is easy to spread.
   The sealants of (a), (b), (c) and (d) may then be treated as follows to obtain desired properties:
(i) the sealants of (a) and (b) are heated up to about 1450°C, using 15°C/minute increases in temperature, and held at about 1450°C for at least 60 minutes to obtain a closed and acid resistant surface;
(ii) the sealant of (b) is heated up to about 370°C and then held at 370°C for around 60 minutes to obtain a non-closed but acid resistant surface;
(iii)the sealant of (d) is heated up to about 1200°C and is then held at 1200°C for around 60 minutes to obtain a closed and acid resistant surface;
(iv) the sealants of (a), (b), (c) and (d) may undergo laser treatment or treatment in an electrically alternating field up to the melting point of the silicon powder where present, ie about 1450°C, to obtain an acid resistant and closed surface.

The step of providing the glue may comprise:
mixing at least one metal oxide with a volatile organic material; wherein
the obtained mixture is in a liquid or paste-like form.

It is preferred if the components of the glue are added together at substantially normal room temperature and thoroughly mixed using, for example, a stirrer.

According to a third aspect of the present invention there is provided use of a glue :in the manufacture of quartz glass products, the glue comprising:
at least one metal oxide, and
a volatile organic material.

Preferably, the glue is in a form capable of being applied between at least two surfaces. For example, the glue may be in a liquid or paste-like form.

Preferably, the metal oxide is selected from any Group III or IV or transition metal oxides. However, it is preferred if α-type aluminium oxide (Al₂O₃) is used. Alternatively, a mixture of α-type Al₂O₃ and another metal oxide may be used.

Preferably, the volatile organic component is an alcohol and specifically may be ethylene glycol.

Preferably, the ratio by weight of metal oxide ranges from 85% to 95% by weight of the glue; the volatile organic component ranges from 5% to 15% by weight of the glue.

Particularly, where the volatile organic material is an alcohol based component, the alcohol based component may range from 5% to 15% by weight of the glue; where the volatile organic material is a wax, the wax component may range from 5% to 15% by weight of the glue; where the volatile organic material is diluent type 503T (Registered Trademark, supplied by Kager GmbH) the diluent type 503T may range from 5% to 15% by weight of the glue, and where an optional AEROSIL® (eg OX 50, Registered Trademark, supplied by Degussa-Huels) has been added, approximately 5% by weight of the glue.

Preferably, the metal oxide is at least 99.9% pure.

Preferably, where the volatile organic material is a wax, the wax is a polyalkylene or polyethylene wax with 15 AEROSIL® to 20 carbon atoms per chain.

Preferably, where the volatile organic material is an alcohol based component, the alcohol based component is any suitable alcohol compound, which has a boiling point of less than 200°C. It is further preferred if the alcohol based compound is a polyol. It is most preferred that ethylene glycol (CH₂OHCH₂OH) is used.

### BRIEF DESCRIPTION OF DRAWINGS

Embodiments of the present invention will now be described by way of example only, and with reference to the accompanying drawings, which are:
- **Figure 1**: a perspective view of a pocket hole and a rod ready for insertion into the pocket hole, forming part of a first quartz glass product according to the present invention;
- **Figure 2**: a side view of a second quartz glass product according to the present invention comprising a bell jar;
- **Figure 3**: perspective views of third, fourth and fifth quartz glass products according to the present invention comprising epitaxy tubes;
- **Figure 4**: a side view of a sixth quartz glass product according to the present invention comprising an epitaxy tube; and
- **Figure 5**: a side view of a seventh quartz glass product according to the present invention comprising a wafer carrier.

### DETAILED DESCRIPTION OF DRAWINGS

A glue used in the present invention comprises a combination of at least one metal oxide, a volatile organic material such as an alcohol based compound, and/or a wax and/or diluent type 503T, and/or an AEROSIL® (eg OX 50).

In a particular embodiment, the glue is formed by mixing α-type Al₂O₃ powder of particle size of less than 0.1mm with ethylene glycol so that a liquid or paste-like material is obtained. The amount of Al₂O₃ which may be used ranges from 85% to 95% by weight of the glue; the amount of alcohol based compound which may be used ranges from 5% to 15% by weight of the glue; the amount of wax which may be used ranges from 5% to 15% by weight of the glue; the amount of diluent type 503T which may be used ranges from 5% to 15% by weight of the glue, and where the amount of AEROSIL® which may be used approximates 5% by weight of glue.

However, it is preferred to use 90% by weight of α-type Al₂O₃ and 10% by weight of ethylene glycol. The two components are mixed together at room temperature for around 5 minutes prior to being ready for use. The obtained glue can be stored and used later for up to 3 months and has a minimum lifetime of 30 minutes.

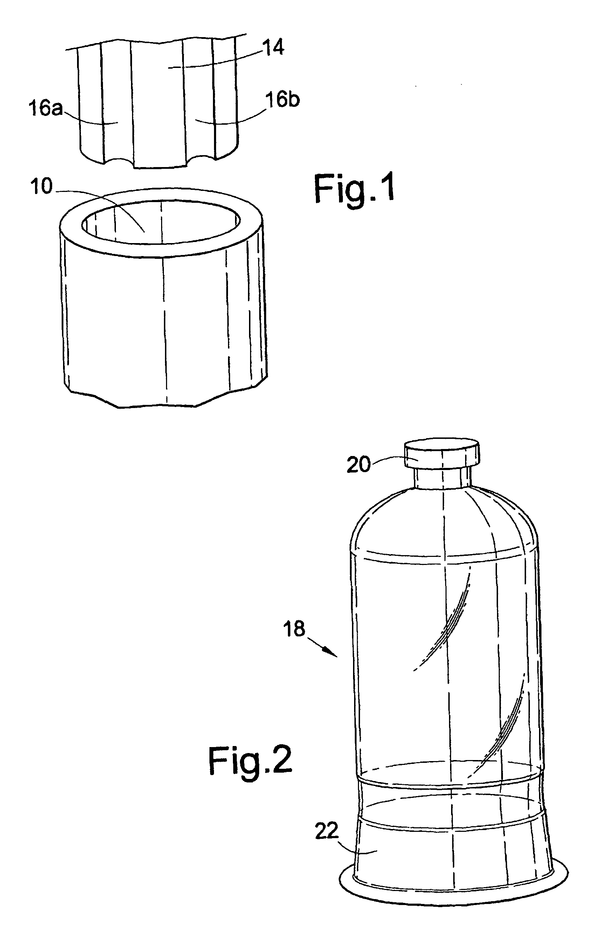

The formed glue is then applied to objects such as quartz glass bodies to be adhered. The glue may be applied by brush or sprayed on. As shown in Figure 1, there is a body 5 having a pocket hole 10. Above the pocket hole 10 there is a rod 14 which has three semi-circular incisions 16a, 16b, 16c on its outer surface. The semi-circular incisions 16a, 16b, 16c, run parallel to a longitudinal axis of rod 14.

The diameter of the pocket hole 10 can be of any size, but is about 0.15mm less than the diameter of the rod 14. This is to allow for the expansion of the glue.

After application of the glue to the rod 14, the rod 14 is slotted into the pocket hole 10. 60 minutes drying at 100°C then occurs.

The joined pocket hole 10 and rod 14 are then heated at 200°C and 375°C for about 60 minutes each. Optionally, the joined products are also heated to about 1200°C. (The 200°C heating step is only required if ethylene glycol is present).

Heating at 100°C causes some of the volatile solvent ie the ethylene glycol, to evaporate, hence reducing the volume of the glue. Raising the temperature to 200°C causes the remaining organic filling material, ie the remaining ethylene glycol to be partly destroyed and released in gaseous form. During this stage of the heating, an inorganic three-dimensional framework of Al₂O₃ and aluminium carbide is created and the volume of the glue increases. Heating up to 375°C causes the inorganic three-dimensional framework to further expand so that the rod 14 becomes wedged in the pocket hole 10. The expansion around the circular incisions 16a, 16b, 16c further aids the joining of the pocket hole 10 and the rod 14. The glue has been found to expand up to about eight times its original size.

Before the joined product can be used in, for example, in the semiconductor industry, the exposed glue should beneficially be sealed. A first way of sealing the glue is to apply highly pure silicon powder wherein the grain size is less than 0.1mm on top of the glue. A second way of sealing is to use highly pure silicon powder mixed with ethylene glycol wherein the obtained paste is spread on top of the glue. Thirdly, highly pure silicon powder mixed with AEROSIL®, (eg Type OX 50 or MOX 170) approximately 2% by volume and/or approximately 1% by volume of cordierite glass SiO₂ (2MgO.2Al₂O₃) with a grain size of 10 to 20*µ*m is mixed with ethylene glycol until a paste is obtained that is easy to spread. A fourth way of sealing is to use a sealant made of Glasurfluid, Empress 1 (liquid), approximately 35% by weight, mixed with AEROSIL® (eg OX 50), approximately 5% by weight, mixed with Glasurpaste, Empress 2 (paste), approximately 60% by weight, until a paste is obtained that is easy to spread. In the first and second ways of sealing, the glued object is incrementally heated, with a 15°C rise per minute, up to about 1450°C wherein the temperature of 1450°C is held for at least 60 minutes. This ensures that the sealant surface is closed (ie no harmful substances can be released) and acid-resistant. Alternatively, for the second way of sealing, a temperature of 370°C is held for 60 minutes. This produces a non-closed (ie harmful substances can be released) but acid-resistant surface. In the fourth way of sealing, the sealant of (d) is heated up to about 1200°C and then held at 1200°C for 60 minutes to obtain a closed and acid resistant surface. For all ways of sealing, laser treatment or treatment in an electrically alternating field up to the melting point of the sealant (ie minimum of 1450°C) can be used. This produces an acid-resistant and closed-sealant surface.

In a further embodiment of the invention is the sealant itself is used to adhere, for example, one or more quartz glass bodies without the use of a metal oxide and a volatile organic material.

Therefore a first way of gluing is to apply highly pure silicon powder wherein the grain size is less than 0.1mm on top of the glue. A second way of gluing is to use highly pure silicon powder mixed with ethylene glycol wherein the obtained paste is spread on top of the glue. Thirdly, highly pure silicon powder mixed with AEROSIL®, (eg Type OX 50 or MOX 170) approximately 2% by volume and/or approximately 1% by volume of cordierite glass SiO₂ (2MgO.2Al₂O₃) with a grain size of 10 to 20*µ*m and mixed with ethylene glycol until a paste is obtained that is easy to spread. A fourth way of gluing, where the volatile organic material is an alcohol based component, the alcohol based component ranges from 25% to 35% by weight of the glue, where the volatile organic material is diluent type 503T (Registered Trademark, supplied by Kager GmbH), the diluent type 503T. ranges from 55% to 65% by weight of the glue, combined with AEROSIL® (eg OX 50, Registered Trademark), approximately 5% by weight of the glue, and mixed until a paste is obtained that is easy to spread. In the first and second way of gluing, the glued object is incrementally heated, with a 15°C rise per minute, up to about 1450°C wherein the temperature of 1450°C is held for at least 60 minutes. This ensures that the surface of the glue is closed (ie no harmful substances can be released) and acid-resistant. Alternatively, for the second way of gluing, a temperature of 370°C is held for 60 minutes. This produces a non-closed (ie harmful substances can be released) but acid-resistant surface.
In the fourth way of gluing, the glue is heated up to about 1200°C and then held at 1200°C for 60 minutes to obtain a closed and acid resistant surface. For all ways of gluing, laser treatment or treatment in an electrically alternating field up to the melting point of the sealant (ie minimum of 1450°C) can be used. This produces an acid-resistant and closed surface.

The use of the glue as herein discussed reduces the time for tempering and enables the affixing of two objects using a one-step process. The glue can also be used to attach two flat surfaces and therefore there is no need for pocket holes or any other attachment surfaces. The gluing process can also be used to repair broken quartz glass products.

In particular, the glue may be used in the processing of pedestals, boats, carriers, tubes, injectors, bell jars, profile tubing, gas inlet pipes with optional cup joints and tanks such as for use with acids.

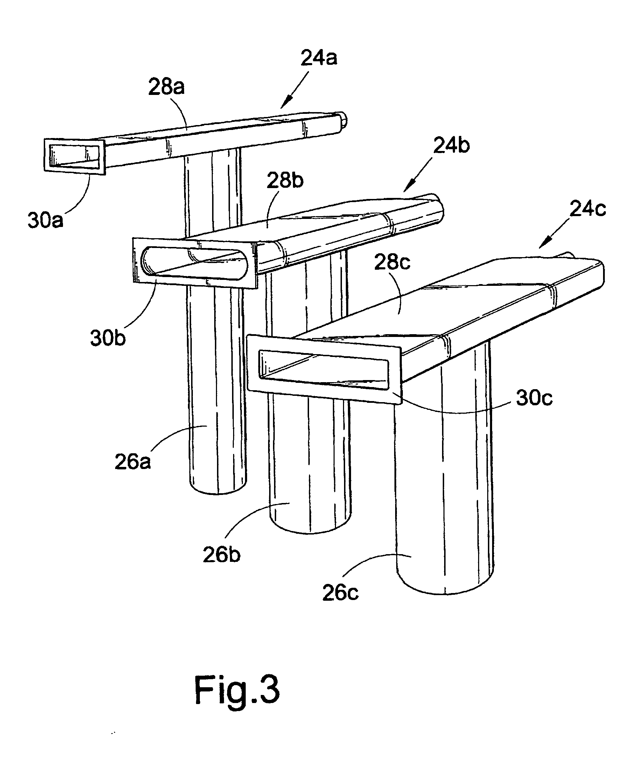

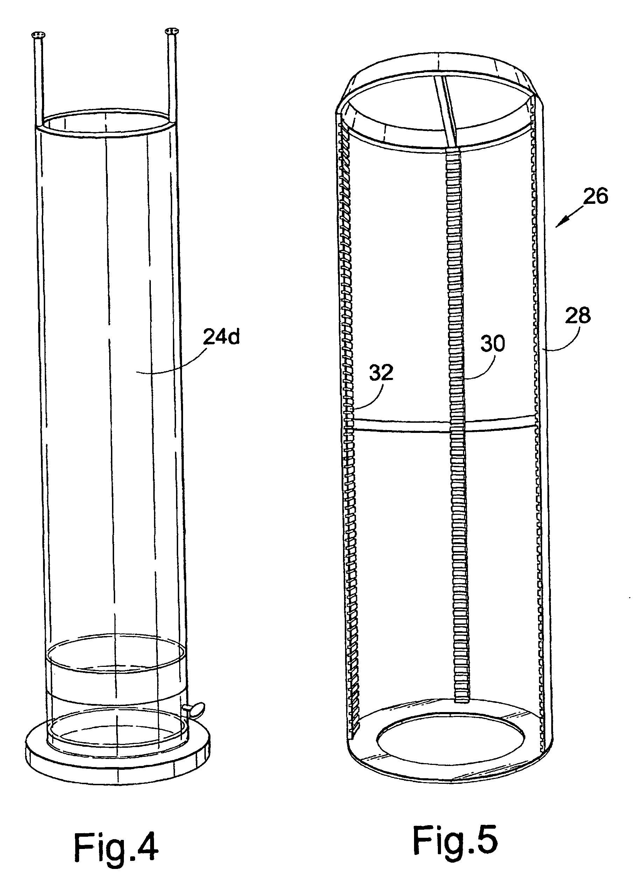

Figure 2 shows a bell jar 18 with a glued top 20 and base section 22. Figure 3 shows epitaxy tubes 24a, 24b, 24c, wherein the rectangular sections 28a, 28b, 28c each have an end plate section 30a, 30b, 30c glued onto one of the ends. Figure 4 shows a further epitaxy tube 24d. Figure 5 shows a wafer carrier 26 which has three vertical columns 28, 30, 32.

### Example 1

Proof of the necessary strength of the glue of the present invention was given by means of the following example. The main dimensions of the test objects were:
Rod - diameter at the glued joint 9.7±0.02mm, length at the glued joint 8±0.2mm;
Plate - thickness 30 ± 0.5mm, bore diameter 9.7 ± 0.05mm and depth 8.0±0.3mm.

The target value of the test was 50 N/mm². The rod made of quartz glass was bound together with the plate made of quartz glass by means of a glued joint. Determination of the strength of the glued joint was carried out by means of a tearing machine. No limits for the strength of the glued joint could be established in this way because with all of these tests there was no breakage of the glued joint but a break of the rod above the glued joint. The glued joint was therefore found to be very strong.

### Example 2

A glued test object was exposed to an aggressive acid medium for a defined length of time. The test object was then rinsed under running water. The test object then underwent the test described under Example 1. The aim was to prove that the test object's exposure to aggressive media does not destroy or weaken the glued joint.

### Test duration - 30 minutes;

Medium 1: hydrofluoric acid (40%).;
Medium 2: hydrofluoric acid (40%) with nitric acid (60%) at a ratio of 3(HF):1(HNO₃ ;
Medium 3: sulphuric acid (40%), with hydrogen peroxide ((30%) at 110° - 140°C) ;
Medium 4: hydrofluoric acid (37%) with hydrogen peroxide (30%) at room temperature;
Medium 5: hydrofluoric acid (37%) with hydrogen peroxide (30%) at room temperature; and
Medium 6: caustic ammonia (29%) with hydrogen hydroxide (30%) at room temperature.

It was shown that the range of acids did not weaken the joint.

## Claims

1. A quartz glass product including at least two quartz glass bodies adhered together by a glue, the glue comprising at least one metal oxide and a volatile organic material.

2. A quartz glass product according to claim 1, wherein the quartz glass bodies are formed from natural or synthetic quartz glass.

3. A quartz glass product according to either of claims 1 or 2, wherein the quartz glass product is adapted for use in one of: the chemical industries, casing and container production, clean room applications, semiconductor production facilities, medical technology and storage/sealing technology in mechanical engineering and precision mechanics.

4. A quartz glass product according to any of claims 1 to 3, wherein the quartz glass product is selected from one of the following: a pedestal, boat, carrier, tube, injector, bell jar, profile tubing, gas inlet pipe with optional cup joints and a tank such as for use with acids.

5. A method of manufacturing a quartz glass product by adhering at least two quartz glass bodies together comprising the steps of:
providing a glue comprising at least one metal oxide and a volatile organic material,
applying the glue to at least a portion of at least one of the quartz glass bodies, and
presenting the portion of one of the quartz glass bodies and a portion of the other quartz glass body one to the other so as to adhere the quartz glass bodies together by means of the glue.

6. A method according to claim 5, wherein the glue is heated after the quartz glass bodies have been presented to one another.

7. A method according to either of claims 5 or 6, wherein the glue is applied by inserting the glue into an aperture of one of the quartz glass bodies and/or optionally placing the glue onto a portion of a member of the other quartz glass body which fits into the aperture.

8. A method according to claim 7, wherein the aperture and member have co-acting portions so that the member slots into the aperture.

9. A method according to either of claims 7 or 8, wherein the portion of the member comprises semi-circular incisions on an outer surface of the member.

10. A method according to any of claims 6, or claims 7 to 9 when dependent upon claim 6, wherein the heating of the glue comprises a number of heating steps.

11. A method according to claim 10, wherein the heating of the glue comprises the steps of:
heating to about 100°C for about 60 minutes;
heating to about 200°C for about 60 minutes;
heating to about 370°C for about 60 minutes;
and optionally heating to about 1200°C for about 60 minutes.

12. A method according to any of claims 6 to 10, wherein heating the glue above about 300°C causes the metal oxide structure to expand.

13. A method according to claim 12, wherein an original size of the metal oxide expands up to about eight times on heating.

14. A method according to claim 6 or any of claims 7 to 13 when dependent upon claim 6, wherein an exposed surface of the glue is, after cooling, sealed with a sealant.

15. A method according to claim 14, wherein the sealant is formed from one or more of the following:
(a) pure silicon powder with a grain size smaller than 0.1mm;
(b) pure silicon powder with a grain size smaller than 0.1mm, mixed with ethylene glycol until a paste that is easy to spread is obtained;
(c) pure silicon powder with a grain size smaller than 0.1mm in an amount of 0.1 to 1.5% by weight, mixed with approximately 1% by volume of cordierite glass SiO₂ (2MgO. 2Al₂O₃) with a grain size of 0.1mm mixed with ethylene glycol until a paste that is easy to spread is obtained; or
(d) a liquid component approximately 35% by weight, mixed with AEROSIL® approximately 5% by weight, mixed with a paste component approximately 60% by weight until a paste is obtained that is easy to spread.

16. A method according to claim 15, wherein the sealant is further treated as follows:
(i) the sealants of (a) and (b) are heated up to about 1450°C, using 15°C/minute increases in temperature, and held at about 1450°C for at least 60 minutes to obtain a closed and acid resistant surface;
(ii) the sealant of (b) is heated up to about 370°C and then held at 370°C for around 60 minutes to obtain a non-closed but acid resistant surface;
(iii)the sealant of (d) is heated up to about 1200°C and is then held at 1200°C for around 60 minutes to obtain a closed and acid resistant surface;
(iv) the sealants of (a), (b), (c) and (d) undergo laser treatment or treatment in an electrically alternating field up to the melting point of the silicon powder where present to obtain an acid resistant and closed surface.

17. A method according to any of claims 5 to 16, wherein the step of providing the glue comprises:
mixing at least one metal oxide with a volatile organic material;
wherein the obtained mixture is in a liquid or paste-like form.

18. A method according to claim 17, wherein the at least one metal oxide and the volatile organic material are added together at substantially normal room temperature and thoroughly mixed using a stirrer.

19. Use of a glue in the manufacture of a quartz glass product, the glue comprising:
at least one metal oxide, and
a volatile organic material.

20. Use of a glue in the manufacture of a quartz glass product according to claim 19, wherein the volatile organic material is any organic material capable of evaporating under heat and acting as a liquid/paste-like medium for the metal oxide such as an organic solvent.

21. Use of a glue in the manufacture of a quartz glass product according to either of claims 19 or 20, wherein the glue is in a form capable of being applied between at least two surfaces.

22. Use of a glue in the manufacture of a quartz glass product according to any of claims 19 to 21, wherein the glue is in a liquid or paste-like form.

23. Use of a glue in the manufacture of a quartz glass product according to any of claims 19 to 22, wherein the metal oxide is selected from any Group III or IV or transition metal oxides.

24. Use of a glue in the manufacture of a quartz glass product according to any of claims 19 to 23, wherein α-type aluminium oxide (Al₂O₃) is used.

25. Use of a glue in the manufacture of a quartz glass product according to any of claims 19 to 22, wherein a mixture of α-type Al₂O₃ and another metal oxide is used.

26. Use of a glue in the manufacture of a quartz glass product according to any of claims 19 to 25, wherein the volatile organic component is an alcohol or alcohol based component such as ethylene glycol.

27. Use of a glue in the manufacture of a quartz glass product according to any of claims 19 to 26, wherein the ratio by weight of metal oxide ranges from 85% to 95% by weight of the glue; the volatile organic component ranges from 5% to 15% by weight of the glue.

28. Use of a glue in the manufacture of a quartz glass product according to any of claims 19 to 27, wherein where the volatile organic material is an alcohol based component, the alcohol based component ranges from 5% to 15% by weight of the glue; where the volatile organic material is a wax, the wax component ranges from 5% to 15% by weight of the glue; and where the volatile organic material is diluent type, the volatile organic material ranges from 5% to 15% by weight of the glue.

29. Use of a glue in the manufacture of a quartz glass product according to any of claims 19 to 28, wherein the metal oxide is at least 99.9% pure.

30. Use of a glue in the manufacture of a quartz glass product according to claim 28, wherein the wax is a polyalkylene or polyethylene wax with 15 to 20 carbon atoms per chain.

31. Use of a glue in the manufacture of a quartz glass product according to either of claims 26 or 28, wherein the alcohol based component is an alcohol compound which has a boiling point of less than 200°C.

32. Use of a glue in the manufacture of a quartz glass product according to claim 31, wherein the alcohol based component is a polyol such as ethylene glycol (CH₂OHCH₂OH).

## Patentansprüche

1. Quarzglasprodukt, das mindestens zwei Quarzglaskörper aufweist, die durch einen Klebstoff miteinander verklebt sind, wobei der Klebstoff mindestens ein Metalloxid und eine flüchtige organische Substanz aufweist.

2. Quarzglasprodukt nach Anspruch 1, wobei die Quarzglaskörper aus natürlichem und synthetischem Quarzglas geformt sind.

3. Quarzglasprodukt nach einem der Ansprüche 1 oder 2, wobei das Quarzglasprodukt an den Gebrauch in einem der folgenden Industriezweige angepaßt ist: chemische Industrie, Behälter- und Containerproduktion, Reinraumanwendungen, Halbleiterproduktionseinrichtungen, Medizintechnik und Lager-/Versiegelungstechnik in Maschinenbau und Feinmechanik.

4. Quarzglasprodukt nach einem der Ansprüche 1 bis 3, wobei das Quarzglasprodukt unter einem der folgenden ausgewählt ist: Sockel, Schiffchen bzw. Scheibenhalter, Träger, Röhre, Injektor, Glocke, Profilrohrmaterial, Gaseinlaßrohr mit optionalen Kugelschliffverbindungen und ein Behälter, wie z. B. zur Verwendung bei Säuren.

5. Verfahren zur Herstellung eines Quarzglasprocdukts durch Zusammenkleben von mindestens zwei Quarzglaskörpern, mit den folgenden Schritten:
Bereitstellen eines Klebstoffs, der mindestens ein Metalloxid und eine flüchtige organische Substanz aufweist,
Auftragen des Klebstoffs zumindest auf einen Abschnitt eines der Quarzglaskörper, und
Aneinanderlegen des Abschnitts eines der Quarzglaskörper und eines Abschnitts des anderen Quarzglaskörpers, um die Quarzglaskörper durch den Klebstoff miteinander zu verkleben.

6. Verfahren nach Anspruch 5, wobei der Klebstoff erhitzt wird, nachdem die Quarzglaskörper aneinandergelegt worden sind.

7. Verfahren nach einem der Ansprüche 5 oder 6, wobei der Klebstoff aufgebracht wird, indem der Klebstoff in eine Öffnung eines der Quarzglaskörper eingefüllt und/oder wahlweise der Klebstoff auf einen Abschnitt eines in die Öffnung passenden Glieds des anderen Quarzglaskörpers aufgebracht wird.

8. Verfahren nach Anspruch 7, wobei die Öffnung und das Glied zusammenwirkende Abschnitte aufweisen, so daß das Glied in die Öffnung hineinpaßt.

9. Verfahren nach einem der Ansprüche 7 oder 8, wobei der Abschnitt des Glieds halbkreisförmige Einschnitte an einer Außenfläche des Glieds aufweist.

10. Verfahren nach Anspruch 6 oder einem der Ansprüche 7 oder 9, wenn diese von Anspruch 6 abhängig sind, wobei das Erhitzen des Klebstoffs eine Anzahl von Erhitzungsschritten aufweist.

11. Verfahren nach Anspruch 10, wobei das Erhitzen des Klebstoffs die folgenden Schritte aufweist:
Erhitzen auf etwa 100°C während etwa 60 Minuten;
Erhitzen auf etwa 200°C während etwa 60 Minuten;
Erhitzen auf etwa 370°C während etwa 60 Minuten;
und wahlweise Erhitzen auf etwa 1200°C während etwa 60 Minuten.

12. Verfahren nach einem der Ansprüche 6 bis 10, wobei das Erhitzen des Klebstoffs auf mehr als etwa 300°C zur Ausdehnung der Metalloxidstruktur führt.

13. Verfahren nach Anspruch 12, wobei sich das Metalloxid beim Erhitzen von einer ursprünglichen Größe auf etwa die achtfache Größe ausdehnt.

14. Verfahren nach Anspruch 6 oder einem der Ansprüche 7 bis 13, wenn diese von Anspruch 6 abhängig sind, wobei eine freiliegende Oberfläche des Klebstoffs nach dem Abkühlen mit einem Dichtungsmittel versiegelt wird.

15. Verfahren nach Anspruch 14, wobei das Dichtungsmittel aus einem oder mehreren der folgenden Materialien geformt wird:
(a) Reinsiliciumpulver mit einer kleineren Korngröße als 0,1 mm;
(b) Reinsiliciumpulver mit einer kleineren Korngröße als 0,1 mm, vermischt mit Ethylenglycol, bis man eine gut streichfähige Paste erhält;
(c) Reinsiliciumpulver mit einer kleineren Korngröße als 0,1 mm in einem Anteil von 0,1 bis 1,5 Gew.-%, vermischt mit etwa 1 Vol.-% Cordieritglas, SiO₂ (2MgO·2Al₂O₃) mit einer Korngröße von 0,1 mm, vermischt mit Ethylenglycol, bis man eine gut streichfähige Paste erhält; oder
(d) einer flüssigen Komponente von etwa 35 Gew.-%, vermischt mit etwa 5 Gew.-% AEROSIL® , vermischt mit etwa 60 Gew.-% einer Pastenkomponente, bis man eine gut streichfähige Paste erhält.

16. Verfahren nach Anspruch 15, wobei das Dichtungsmittel ferner wie folgt behandelt wird:
(i) die Dichtungsmittel gemäß (a) und (b) werden unter Anwendung von Temperaturerhöhungen von 15°C/Minute auf etwa 1450°C erhitzt und mindestens 60 Minuten auf 1450°C gehalten, um eine geschlossene und säurebeständige Oberfläche zu erzielen;
(ii) das Dichtungsmittel gemäß (b) wird auf etwa 370°C erhitzt und dann etwa 60 Minuten auf 370°C gehalten, um eine nicht geschlossene, aber säurebeständige Oberfläche zu erzielen;
(iii) das Dichtungsmittel gemäß (d) wird auf etwa 1200°C erhitzt und dann etwa 60 Minuten auf 1200°C gehalten, um eine geschlossene und säurebeständige Oberfläche zu erzielen;
(iv) die Dichtungsmittel gemäß (a), (b), (c) und (d) werden einer Laserbehandlung oder einer Behandlung in einem elektrischen Wechselfeld bis zum Schmelzpunkt des Siliciumpulvers, falls vorhanden, unterworfen, um eine säurebeständige und geschlossene Oberfläche zu erzielen.

17. Verfahren nach einem der Ansprüche 5 bis 16, wobei der Schritt zum Bereitstellen des Klebstoffs aufweist:
Vermischen mindestens eines Metalloxids mit einer flüchtigen organischen Substanz;
wobei sich das erhaltene Gemisch in einer flüssigen oder pastenähnlichen Form befindet.

18. Verfahren nach Anspruch 17, wobei das mindestens eine Metalloxid und die flüchtige organische Substanz bei im wesentlichen normaler Raumtemperatur zusammengegeben und mit einem Rührwerk gründlich vermischt werden.

19. Verwendung eines Klebstoffs bei der Herstellung eines Quarzglasprodukts, wobei der Klebstoff aufweist:
mindestens ein Metalloxid;
eine flüchtige organische Substanz.

20. Verwendung eines Klebstoffs bei der Herstellung eines Quarzglasprodukts nach Anspruch 19, wobei die flüchtige organische Substanz irgendeine organische Substanz ist, die unter Wärmeeinwirkung verdampfen und als flüssiges/pastenähnliches Medium für das Metalloxid wirken kann, wie z. B. ein organisches Lösungsmittel.

21. Verwendung eines Klebstoffs bei der Herstellung eines Quarzglasprodukts nach einem der Ansprüche 19 oder 20, wobei der Klebstoff in einer Form vorliegt, die zwischen mindestens zwei Oberflächen eingebracht werden kann.

22. Verwendung eines Klebstoffs bei der Herstellung eines Quarzglasprodukts nach einem der Ansprüche 19 bis 21, wobei der Klebstoff in flüssiger oder pastenähnlicher Form vorliegt.

23. Verwendung eines Klebstoffs bei der Herstellung eines Quarzglasprodukts nach einem der Ansprüche 19 bis 22, wobei das Metalloxid unter Metalloxiden der Gruppen III oder IV oder unter Übergangsmetalloxiden ausgewählt ist.

24. Verwendung eines Klebstoffs bei der Herstellung eines Quarzglasprodukts nach einem der Ansprüche 19 bis 23, wobei α-Aluminiumoxid (Al₂O₃) verwendet wird.

25. Verwendung eines Klebstoffs bei der Herstellung eines Quarzglasprodukts nach einem der Ansprüche 19 bis 22, wobei ein Gemisch aus α-Al₂O₃ und einem anderen Metalloxid verwendet wird.

26. Verwendung eines Klebstoffs bei der Herstellung eines Quarzglasprodukts nach einem der Ansprüche 19 bis 25, wobei die flüchtige organische Substanz ein Alkohol oder eine Komponente auf Alkoholbasis ist, wie z. B. Ethylenglycol.

27. Verwendung eines Klebstoffs bei der Herstellung eines Quarzglasprodukts nach einem der Ansprüche 19 bis 26, wobei der Gewichtsanteil des Metall-oxids im Bereich von 85 Gew.-% bis 95 Gew.-% des Klebstoffs und der Gewichtsanteil der flüchtigen organischen Substanz im Bereich von 5 Gew.-% bis 15 Gew.-% des Klebstoffs liegt.

28. Verwendung eines Klebstoffs bei der Herstellung eines Quarzglasprodukts nach einem der Ansprüche 19 bis 27, wobei, falls die flüchtige organische Substanz eine Komponente auf Alkoholbasis ist, der Anteil der Komponente auf Alkoholbasis im Bereich von 5 Gew.-% bis 15 Gew.-% des Klebstoffs liegt; falls die flüchtige organische Substanz ein Wachs ist, der Anteil der Wachskomponente im Bereich von 5 Gew.-% bis 15 Gew.-% des Klebstoffs liegt; und falls die flüchtige organische Substanz ein Verdünnungsmitteltyp ist, der Anteil der flüchtigen organischen Substanz im Bereich von 5 Gew.-% bis 15 Gew.-% des Klebstoffs liegt.

29. Verwendung eines Klebstoffs bei der Herstellung eines Quarzglasprodukts nach einem der Ansprüche 19 bis 28, wobei das Metalloxid eine Reinheit von mindestens 99,9% aufweist.

30. Verwendung eines Klebstoffs bei der Herstellung eines Quarzglasprodukts nach Anspruch 28, wobei das Wachs ein Polyalkylen- oder Polyethylenwachs mit 15 bis 20 Kohlenstoffatomen pro Kette ist.

31. Verwendung eines Klebstoffs bei der Herstellung eines Quarzglasprodukts nach einem der Ansprüche 26 oder 28, wobei die Komponente auf Alkoholbasis eine Alkoholverbindung mit einem Siedepunkt von weniger als 200°C ist.

32. Verwendung eines Klebstoffs bei der Herstellung eines Quarzglasprodukts nach Anspruch 31, wobei die Komponente auf Alkoholbasis ein Polyol ist, wie z. B. Ethylenglycol (CH₂OHCH₂OH).

## Revendications

1. Produit en verre de quartz incluant au moins deux corps en verre de quartz adhérés ensemble par une colle, la colle comprenant au moins un oxyde métallique et un matériau organique volatil.

2. Produit en verre de quartz suivant la revendication 1, dans lequel les corps en verre de quartz sont formés à partir d'un verre de quartz naturel ou synthétique.

3. Produit en verre de quartz suivant l'une ou l'autre des revendications 1 ou 2, dans lequel le produit en verre de quartz est adapté pour une utilisation dans un domaine parmi:
les industries chimiques, la production de gainages et de conteneurs, des applications de salle blanche, des dispositifs de production de semi-conducteurs, une technologie médicale et une technologie de stockage/scellement en génie mécanique et en mécanique de précision.

4. Produit en verre de quartz suivant l'une quelconque des revendications 1 à 3, dans lequel le produit en verre de quartz est choisi parmi un élément de ce qui suit: un appui, une nacelle, un support, un tube, un injecteur, une cloché en verre, des tubes profilés, un tuyau d'entrée de gaz avec des joints sphériques facultatifs et un réservoir comme pour une utilisation avec des acides.

5. Procédé pour la fabrication d'un produit en verre de quartz en faisant adhérer au moins deux corps en verre de quartz ensemble comprenant les étapes:
de fourniture d'une colle comprenant au moins un oxyde métallique et un matériau organique volatil,
d'application de la colle sur au moins une portion d'au moins un des corps en verre de quartz, et
de présentation de la portion d'un des corps en verre de quartz et d'une portion de l'autre corps en verre de quartz l'un à l'autre de manière à faire adhérer les corps en verre de quartz ensemble au moyen de la colle.

6. Procédé suivant la revendication 5, dans lequel la colle est chauffée après la présentation des corps en verre de quartz l'un à l'autre.

7. Procédé suivant l'une ou l'autre des revendications 5 et 6, dans lequel la colle est appliquée en insérant la colle dans une ouverture d'un des corps en verre de quartz et/ou éventuellement en plaçant la colle sur une portion d'un élément de l'autre corps en verre de quartz qui s'emboîte dans l'ouverture.

8. Procédé suivant la revendication 7, dans lequel l'ouverture et l'élément possèdent des portions coopérantes de sorte que l'élément se glisse dans l'ouverture.

9. Procédé suivant l'une ou l'autre des revendications 7 et 8, dans lequel la portion de l'élément comprend des incisions semi-circulaires sur une surface externe de l'élément.

10. Procédé suivant l'une quelconque de la revendication 6, ou des revendications 7 à 9 lorsqu'elles dépendent de la revendication 6, dans lequel le chauffage de la colle comprend un certain nombre d'étapes de chauffage.

11. Procédé suivant la revendication 10, dans lequel le chauffage de la colle comprend les étapes:
de chauffage à environ 100°C pendant environ 60 minutes;
de chauffage à environ 200°C pendant environ 60 minutes;
de chauffage à environ 370°C pendant environ 60 minutes;
et éventuellement de chauffage à environ 1200°C pendant environ 60 minutes.

12. Procédé suivant l'une quelconque des revendications 6 à 10, dans lequel le chauffage de la colle au-dessus d'environ 300°C entraîne la dilatation de la structure de l'oxyde métallique.

13. Procédé suivant la revendication 12, dans lequel la taille d'origine de l'oxyde métallique s'agrandit jusqu'à environ huit fois lors du chauffage.

14. Procédé suivant la revendication 6, ou l'une quelconque des revendications 7 à 13 lorsqu'elles dépendent de la revendication 6, dans lequel une surface exposée de la colle est, après refroidissement, scellée avec un agent de scellement.

15. Procédé suivant la revendication 14, dans lequel l'agent de scellement est formé à partir d'un ou de plusieurs des composés suivants:
(a) une poudre de silicium pur avec une taille de grains inférieure à 0,1 mm;
(b) une poudre de silicium pur avec une taille de grains inférieure à 0,1 mm, mélangée avec de l'éthylène glycol jusqu'à ce qu'une pâte qui est facile à étaler soit obtenue;
(c) une poudre de silicium pur avec une taille de grains inférieure à 0,1 mm dans une quantité de 0,1 à 1,5% en poids, mélangée avec approximativement 1% en volume de verre cordiérite SiO₂(2MgO.2Al₂O₃) avec une taille de grains de 0,1 mm, mélangés avec de l'éthylène glycol jusqu'à ce qu'une pâte qui est facile à étaler soit obtenue; ou
(d) un composant liquide d'approximativement 35% en poids, mélangé avec de l'AEROSIL® d'approximativement 5% en poids, mélangés avec un composant de pâte d'approximativement 60% en poids jusqu'à ce qu'une pâte qui est facile à étaler soit obtenue.

16. Procédé suivant la revendication 15, dans lequel l'agent de scellement est traité en outre comme suit:
(i) les agents de scellement de (a) et (b) sont chauffés jusqu'à environ 1450°C, en employant des augmentations de température de 15°C/minute et maintenus à environ 1450°C pendant au moins 60 minutes pour obtenir une surface fermée et résistant à des acides;
(ii) l'agent de scellement de (b) est chauffé jusqu'à environ 370°C et ensuite maintenu à 370°C pendant environ 60 minutes pour obtenir une surface non fermée mais résistant à des acides;
(iii) l'agent de scellement de (d) est chauffé jusqu'à environ 1200°C et ensuite maintenu à 1200°C pendant environ 60 minutes pour obtenir une surface fermée et résistant à des acides;
(iv) les agents de scellement de (a), (b), (c) et (d) subissent un traitement au laser ou un traitement dans un champ électriquement alternatif jusqu'au point de fusion de la poudre de silicium où ils sont présents pour obtenir une surface résistant à des acides et fermée.

17. Procédé suivant l'une quelconque des revendications 5 à 16, dans lequel l'étape de fourniture de la colle comprend:
le mélange d'au moins un oxyde métallique avec un matériau organique volatil;
dans lequel le mélange obtenu est sous une forme liquide ou de type pâte.

18. Procédé suivant la revendication 17, dans lequel le au moins un oxyde métallique et le matériau organique volatil sont ajoutés ensemble à substantiellement une température ambiante normale et mélangés entièrement en employant un agitateur.

19. Utilisation d'une colle dans la fabrication d'un produit en verre de quartz, la colle comprenant:
au moins un oxyde métallique, et
un matériau organique volatil.

20. Utilisation d'une colle dans la fabrication d'un produit en verre de quartz suivant la revendication 19, dans laquelle le matériau organique volatil est n'importe quel matériau organique capable de s'évaporer sous de la chaleur et d'agir comme un milieu liquide/type pâte pour l'oxyde métallique tel qu'un solvant organique.

21. Utilisation d'une colle dans la fabrication d'un produit en verre de quartz suivant l'une ou l'autre des revendications 19 et 20, dans laquelle la colle est sous une forme capable d'être appliquée entre au moins deux surfaces.

22. Utilisation d'une colle dans la fabrication d'un produit en verre de quartz suivant l'une quelconque des revendications 19 à 21, dans laquelle la colle est sous une forme liquide ou de type pâte.

23. Utilisation d'une colle dans la fabrication d'un produit en verre de quartz suivant l'une quelconque des revendications 19 à 22, dans laquelle l'oxyde métallique est choisi dans le Groupe III ou IV ou parmi des oxydes de métal de transition.

24. Utilisation d'une colle dans la fabrication d'un produit en verre de quartz suivant l'une quelconque des revendications 19 à 23, dans laquelle de l'oxyde d'aluminium (Al₂O₃) de type α est utilisé.

25. Utilisation d'une colle dans la fabrication d'un produit en verre de quartz suivant l'une quelconque des revendications 19 à 22, dans laquelle un mélange de Al₂O₃ de type α et d'un autre oxyde métallique est utilisé.

26. Utilisation d'une colle dans la fabrication d'un produit en verre de quartz suivant l'une quelconque des revendications 19 à 25, dans laquelle le composant organique volatil est un alcool ou un composant à base d'alcool tel que l'éthylène glycol.

27. Utilisation d'une colle dans la fabrication d'un produit en verre de quartz suivant l'une quelconque des revendications 19 à 26, dans laquelle le rapport en poids de l'oxyde métallique varie de 85% à 95% en poids de la colle; le composant organique volatil varie de 5% à 15% en poids de la colle.

28. Utilisation d'une colle dans la fabrication d'un produit en verre de quartz suivant l'une quelconque des revendications 19 à 27, dans laquelle le matériau organique volatil est un composant à base d'alcool, le composant à base d'alcool varie de 5% à 15% en poids de la colle; dans laquelle le matériau organique volatil est une cire, le composant de cire varie de 5% à 15% en poids de la colle; et dans laquelle le matériau organique volatil est de type diluant, le matériau organique volatil varie de 5% à 15% en poids de la colle.

29. Utilisation d'une colle dans la fabrication d'un produit en verre de quartz suivant l'une quelconque des revendications 19 à 28, dans laquelle l'oxyde métallique est au moins pur à 99,9%.

30. Utilisation d'une colle dans la fabrication d'un produit en verre de quartz suivant la revendication 28, dans laquelle la cire est une cire de polyallcylène ou de polyéthylène avec 15 à 20 atomes de carbone par chaîne.

31. Utilisation d'une colle dans la fabrication d'un produit en verre de quartz suivant l'une ou l'autre des revendications 26 et 28, dans laquelle le composant à base d'alcool est un composé d'alcool qui possède un point d'ébullition inférieur à 200°C.

32. Utilisation d'une colle dans la fabrication d'un produit en verre de quartz suivant la revendication 31, dans laquelle le composant à base d'alcool est un polyol tel que l'éthylène glycol (CH₂OHCH₂OH).
